# EUROPÄISCHE PATENTSCHRIFT

(11) **EP 1 457 403 B1**
(45) Veröffentlichungstag und Bekanntmachung des Hinweises auf die Patenterteilung: **10.05.2006**
(21) Anmeldenummer: 04005166.6
(22) Anmeldetag: 04.03.2004
(51) Int. Cl.: B62B 3/06, B66F 9/075

(54) **Mitgängergabelhubwagen**
Fork truck
Chariot élévateur à bras

(30) Priorität: 14.03.2003 DE 10311344
(43) Veröffentlichungstag der Anmeldung: 15.09.2004
(73) Patentinhaber: STILL S.A.R.L., 77107 Meaux Cedex (FR)
(72) Erfinder: Alegre, Jean-Pierre, 60150 Thourotte (FR); Bimont, Cyril, 60940 St. Vaast Angicourt (FR); Fortin, Dominique, 60160 Montataire (FR); Garcia, David, 60500 Chantilly (FR)
(74) Vertreter: Lang, Michael

(56) Entgegenhaltungen:
- EP-A- 1 197 420
- DE-A- 19 618 906
- FR-A- 2 137 219
- FR-A- 2 822 124
- US-A- 3 419 104

## Beschreibung

Die Erfindung betrifft einen Mitgängergabelhubwagen mit einem Antriebsteil, einem deichselförmigen Steuerungsteil und einem Lastteil

Derartige Fahrzeuge werden zum innerbetrieblichen Transport von Waren über zumeist kurze Entfemungen verwendet. Die Bedienperson geht vor oder neben dem Fahrzeug und führt dieses über eine Deichsel. Zur Bewältigung längerer Distanzen kann auch eine ausklappbare Fahrerplattform vorgesehen sein, so dass der Fahrer mit dem Fahrzeug mitfährt und Richtung und Geschwindigkeit über die Deichsel beziehungsweise daran angebrachte Bedienelemente steuert. Aus der US 3 419 104 ist zudem ein Fahrzeug bekannt, das im Mitgängerbetrieb wie auch von einer fest installierten Plattform gesteuert werden kann.

Werden aus einem Lager per Hand einzelne Waren entnommen, die in einer in einem Flurförderzeug mitgeführten Palette abgelegt werden, spricht man von Kommissionieren. Bei den dazu verwendeten speziellen Kommissioniergeräten fährt die Bedienperson auf einer festen Fahrerplattfom mit und steht zur Entnahme von Waren auf der zweiten Regalebene auf einer erhöhten oder höhenverstellbaren Plattform, die Teil des Flurförderzeugs ist. Demzufolge sind Kommissioniergeräte im Vergleich zu Mitgängerhubwagen sehr aufwändige und damit kostspielige Konstruktionen. Ein derartiges Fahrzeug ist in der DE 196 18 906 A1 gezeigt.

Ist eine Entnahme von Waren aus den oberen Regalebenen von Hand nur selten nötig und sind die zurückzulegenden Entfemungen relativ kurz, ist die Anschaffung eines solchen Kommissionierers häufig nicht rentabel und die Verwendung eines Mitgängerhubwagens reicht zur Bewältigung der Transportaufgaben aus. Um die oberen Regalebenen zu erreichen, muss die Bedienperson dann allerdings Aufstiegshilfen wie Leitern oder Trittschemel verwenden. Diese an die gewünschte Stelle zu bringen, ist mit erheblichem Aufwand verbunden. Zudem ist in engen Regalgängen eine günstige Positionierung von Leiter und Hubwagen oft nur schwer möglich, was zu gefährlichen Beladesituationen führen kann. Aus der FR 2 137 219 ist ein Handgabelhubwagen bekannt, der eine treppenartige Aufstiegsvorrichtung aufweist, die als relativ aufwändiges Bauteil eigens zu diesem Zweck angebracht wird. Ein derartiges Fahrzeug ohne eigenen Antrieb ist jedoch bei zur Bewältigung umfangreicher Transportaufgaben und zum Bewegen schwerer Güter ungeeignet zumal das hohe Eigengewicht der eigenständigen Aufstiegshilfe die Nutzlast weiter verringert.

Der Erfindung liegt daher die Aufgabe zugrunde, einen Mitgängergabelhubwagen mit einem Antriebsteil, einem deichselförmigen Steuerungsteil und einem Lastteil schaffen, der einer Bedienperson eine einfache Möglichkeit bietet, höher gelegene Bereiche, beispielsweise Regale, sicher zu erreichen.

Diese Aufgabe wird erfindungsgemäß dadurch gelöst, dass am Antriebsteil keine feste Fahrerplattform angeordnet ist, und dass die Oberseite des Antriebsteils als Standfläche ausgebildet ist. Dadurch kann die Bedienperson auf die Standfläche steigen und so höher gelegene Bereiche erreichen. Das Mitführen von Leitern wird überflüssig und eine zu beladende Palette ist immer in optimaler Reichweite.

Zweckmäßigerweise ist die Standfläche in einem Abstand von weniger als 1,3 Meter, vorzugsweise weniger als 1 Meter, von der Aufstandsfläche des Hubwagens angeordnet. Dies ermöglicht es der Bedienperson, die Standfläche mit geringem Aufwand zu besteigen und dennoch bei üblichen Regalen eine zweite Ebene zu erreichen.

Besonders vorteilhaft ist es, wenn mindestens eine Trittstufe zum einfacheren Besteigen der Standfläche, vorzugsweise als Teil der Abdeckung des Antriebsteils ausgebildet, am Hubwagen angebracht ist. Dadurch wird der Bedienperson der Zugang zur Standfläche erleichtert. Bei niedrigeren Regalhöhen kann es auch ausreichen, wenn die Bedienperson nur auf die Trittstufe steigt. Indem die Stufe als Teil einer Abdeckung oder Verkleidung des Antriebsteils ausgebildet ist, wird eine einfach zu fertigende Anordnung erzielt.

In einer vorteilhaften Ausgestaltung ist die mindestens eine Trittstufe seitlich des deichselförmigen Steuerungsteils auf der dem Lastteil abgewandten Seite des Antriebsteils angeordnet. Dadurch kann die Bedienperson aus der Position, die sie beim Führen des Hubwagens einnimmt, ohne große Umwege zur Standfläche gelangen. Die Trittstufe ist in diesem Bereich auch vor Beschädigungen geschützt und ragt nicht wesentlich über den Umriss des Hubwagens hinaus.

Vorteilhafterweise ist die Trittstufe in einem Abstand von weniger als 75 cm, vorzugsweise weniger als 55 cm, von der Aufstandsfläche des Hubwagens angeordnet. Dies ermöglicht der Bedienperson noch ein angenehmes Aufsteigen zur Standfläche, ohne dass mehrere Stufen erforderlich sind

Es ist zweckmäßig, wenn beiderseits des deichselförmigen Bedienteils jeweils mindestens eine Stufe angeordnet ist. Dadurch kann die Bedienperson von beiden Seiten auf die Standfläche steigen.

Vorteilhafterweise sind die von der Bedienperson zu betretenden Flächen mit einer rutschfesten Oberfläche versehen. Dadurch wird die Sicherheit der Bedienperson beim Besteigen der Trittstufe oder der Standfläche wesentlich verbessert.

In einer besonders vorteilhaften Ausgestaltung der Erfindung ist eine Aufstiegshilfe in Form eines Griffelements auf der Oberseite des Antriebsteils angebracht. Dies ermöglicht der Bedienperson, sich beim Aufsteigen und bei der Bewegung auf der Standfläche festzuhalten und erhöht so die Sicherheit der Bedienperson.

Es ist von Vorteil, wenn ein Schutzgitter zwischen Antriebsteil und Lastteil angeordnet ist. Dadurch wird vermieden, dass eine Last z. B. von der auf dem Lastaufnahmemittel mitgeführten Palette auf die Bedienperson herabfällt. Gleichzeitig wird ein Herunterfallen der Bedienperson in Richtung der Lastaufnahmevorrichtung, beispielsweise beim Ablegen einer Ware, verhindert.

Besonders vorteilhaft ist es, wenn die Aufstiegshilfe und/oder Griffelemente zur Sicherung der Bedienperson als Teil des Schutzgitters ausgebildet sind. Dies ermöglicht eine Platz sparende und einfach herstellbare Anordnung der Aufstiegshilfe und/oder der Griffelemente, die die Bewegungsmöglichkeiten der Bedienperson auf der Standfläche möglichst wenig einschränkt.

Weitere Vorteile und Einzelheiten der Erfindung werden anhand des in den schematischen Figuren dargestellten Ausführungsbeispiels näher erläutert. Dabei zeigt
- Figur 1: einen erfindungsgemäßen Mitgängergabelhubwagen mit einer Standfläche, Trittstufen und einem Schutzgitter mit einer Aufstiegshilfe von schräg vorn gesehen,
- Figur 2: eine Bedienperson beim Besteigen eines erfindungsgemäßen Hubwagens von schräg vom gesehen,
- Figur 3: einen erfindungsgemäßen Hubwagen mit einer Bedienperson auf der Standfläche von schräg hinten gesehen.

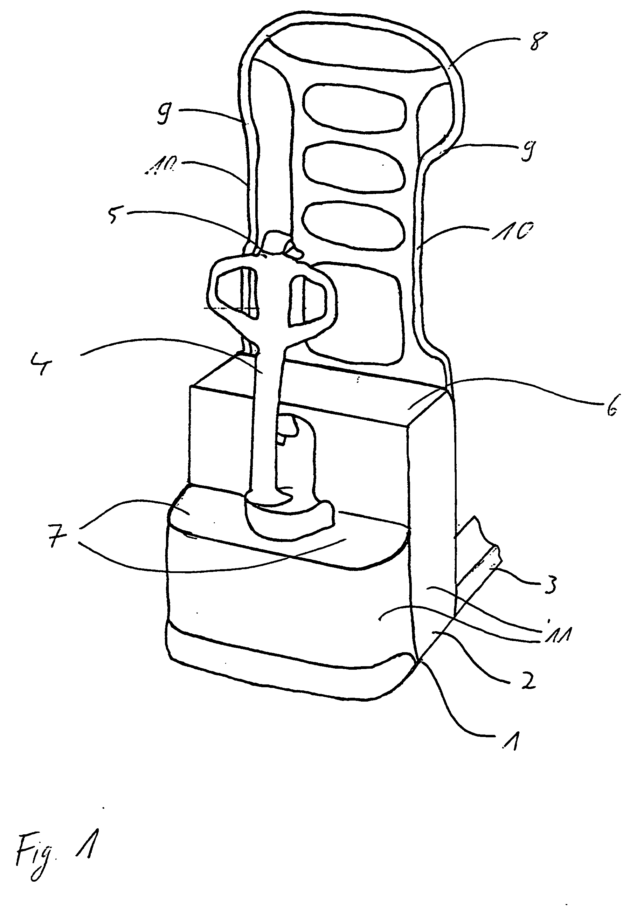

In Figur 1 ist ein Mitgängergabelhubwagen 1 mit einem Antriebsteil 2, einem hier nur angedeuteten Lastteil 3 und einem deichselförmigen Steuerungsteil 4 dargestellt. Der deichselförmige Steuerungsteil 4 trägt die Steuerungs- und Bedienelemente 5, mit dem die nicht dargestellten Antriebe für Fahr- und Hubfunktionen gesteuert werden. Diese Antriebe und die nicht dargestellten Batterien sind im Antriebsteil 2 angeordnet. Der Antriebsteil 2 weist eine erfindungsgemäße Standfläche 6, zwei erfindungsgemäße Trittstufen 7 und ein erfindungsgemäßes Schutzgitter 8 mit einer Aufstiegshilfe 9 und einem Griffelement 10 auf. Auf dem angedeuteten Lastteil 3 kann sich beispielsweise eine Palette befinden, in die die Bedienperson aus Regalen entnommene Waren ablegen kann.

Die Standfläche 6 ist erfindungsgemäß auf der Oberseite des Antriebsteils 2 angeordnet. Dies ist die höchste Stelle des Hubwagens 1, die eine Standmöglichkeit bietet, und ermöglicht so der Bedienperson die größte Reichweite. Dabei sollte die Standfläche 6 jedoch nicht zu hoch angeordnet sein, da sonst der Aufstieg für die Bedienperson zu mühsam oder gefährlich wird. Auch wird ansonsten beim Fahren die Sicht auf das Lastteil 3 eingeschränkt. Eine maximale Höhe von einem Meter hat sich dabei als sinnvoll erwiesen, jedoch sind bei speziellen Anforderungen auch höhere Ausführungen denkbar. Durch die Anordnung der Batterie unterhalb der Abdeckung 11 des Antriebsteils 2 befindet sich unter diesem Bereich auch der Schwerpunkt des unbeladenen Hubwagens 1, so dass die Kippgefahr bei beliebiger Aufstiegsrichtung minimiert ist. Die Bedienperson kann sich auf dieser Fläche nach beiden Seiten des Hubwagens 1 in gleicher Weise bewegen und so besonders in schmalen Gängen gleichermaßen von beiden Seiten Waren aufnehmen. Bei entsprechender Deichsellänge sind auch die Steuer- und Bedienelemente 5 am Steuerungsteil 4 gut erreichbar und die Bedienperson kann beispielsweise den Hub- oder den Fahrantrieb betätigen. Die Trittstufen 7 sind im gezeigten Ausführungsbeispiel erfindungsgemäß auf der Rückseite des Antriebsteils 2 in Form von ebenen Flächen beiderseits des Steuerungsteils 4 angeordnet. Sie sind als Bestandteil der Abdeckung 11 des Antriebsteils 2 ausgebildet. Es sind jedoch auch andere Lösungen denkbar, wie beispielsweise Öffnungen im Gehäuse 11 des Antriebsteils 2, ausklappbare oder fest montierte Stufen. Vorzugsweise werden Lösungen verwendet werden, bei denen die Stufen 7 zumindest beim Fahren nicht wesentlich über die Silhouette des Antriebsteils 2 hinausragen, um so auch in engen Gängen ein gute Manövrierbarkeit zu erzielen. Dies wird im gezeigten Ausführungsbeispiel durch die Anordnung der Stufen 7 auf der Rückseite des Antriebsteils 2 erreicht. Durch die Anordnung der Stufen 7 beiderseits des Steuerungsteils 2 sind die Stufen 7 und damit die Standfläche 6 von beiden Seiten gleichermaßen gut erreichbar. Indem die Stufen 7 als ebene Flächen als Teil des Gehäuses 11 des Antriebsteils 2 ausgeführt sind, lassen sich diese besonders einfach herstellen, sind gleichzeitig stabil und einfach begehbar. Sie können so auch als alternative Standfläche genutzt werden, um diejenigen Bereiche zu erreichen, die zwischen den vom Boden und den von der Standfläche 6 aus ideal erreichbaren Bereichen liegen.

Indem die Stufen 7 nicht weiter als 55 cm vom Boden entfernt angeordnet sind, wird ein einfacher Aufstieg sowohl auf die Stufen 7 als auch von den Stufen 7 auf die Standfläche 6 erreicht.

Sinnvollerweise sind sowohl die Trittstufen 7 als auch die Standfläche 6 mit einer rutschfesten Oberfläche versehen. Dies kann beispielsweise durch Gummimatten oder ähnliche Auflagen, aber auch durch spezielle Lackierungen oder Strukturierungen der Oberfläche erreicht werden. Da Hubwagen hauptsächlich in industriellem Umfeld eingesetzt werden, wo beispielsweise Ölverschmutzungen der Böden und damit der Sohlen der Schuhe der Bedienperson auftreten können, wird so die Sicherheit der Bedienperson wesentlich erhöht. Auch auf der Standfläche 6 oder der Trittstufe 7 abgelegte Gegenstände fallen dadurch bei abrupten Fahrmanövem nicht zu Boden.

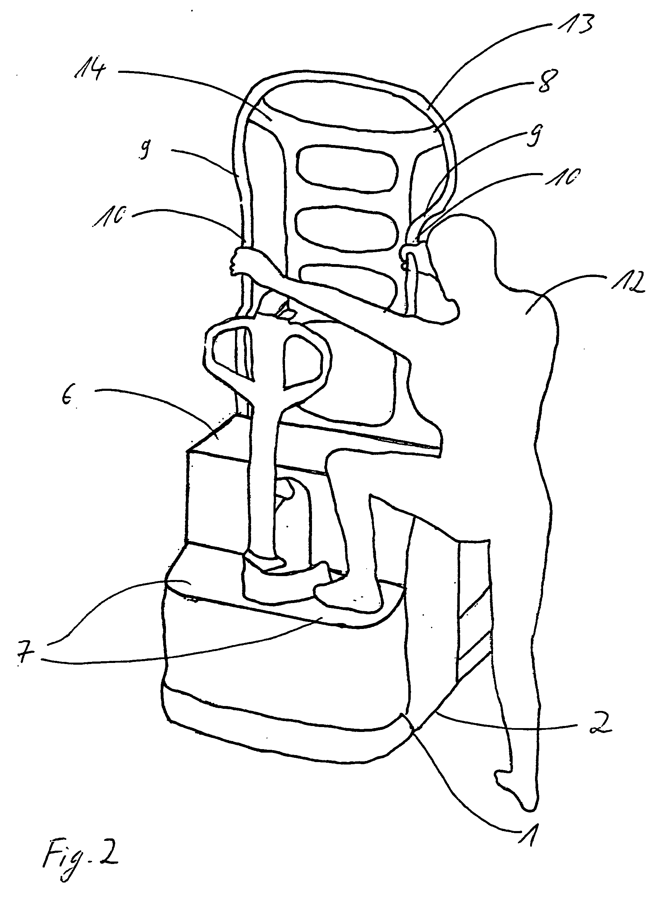

Figur 2 zeigt eine Bedienperson 12 beim Besteigen eines erfindungsgemäßen Hubwagens 1 über die Trittstufe 7 von schräg vom gesehen. Die Bedienperson 12 fasst mit beiden Händen die Griffelemente 10 der Aufstiegshilfe 9. Diese ist erfindungsgemäß als Teil des Schutzgitters 8 ausgeführt, das an der Rückseite des Antriebsteils 2 angebracht ist. Durch die Aufstiegshilfe 9 kann sich die Bedienperson 12 beim Aufsteigen auf die Trittstufen 7 oder die Standfläche 6 festhalten. Dadurch wird die Unfallgefahr verringert und das Besteigen erleichtert.

Im gezeigten Ausführungsbeispiel ist das Schutzgitter 8 aus einem U-förmig gebogenen Rohr 13 und aus einem zwischen den Schenkeln des U-förmigen Rohrs angeordneten, aus Blech gefertigten Teil 14 gebildet. Es sind jedoch auch andere Ausführungen möglich, beispielsweise vollständig aus Rohren oder Stäben gefertigte Gitter oder aus Rohren oder Stäben gefertigte Rahmen, die ein Drahtgitter oder eine schlagfeste Schutzscheibe tragen. Auch leicht abnehmbare oder klappbare Lösungen sind denkbar, um die Sicht der Bedienperson zu verbessern, wenn beispielsweise das Gitter längere Zeit nicht benötigt wird.

Als Aufstiegshilfe 9 wird eine zum Fahrerstandplatz 6 ragende trapezförmige Ausbuchtung verwendet, die der Bedienperson 12 verschiedene günstige Griffmöglichkeiten bietet. Die Aufstiegshilfe 9 kann jedoch auch beispielsweise in Form von seitlich am Antriebsteil 2 angebrachten Bügeln oder von annähernd senkrechten Stäben ausgeführt werden, welche beispielsweise an den Ecken der Standfläche 6 oder auch in der Mitte der dem deichselförmigen Steuerungselement 4 zugewandten Seite angeordnet sein können. Selbst eine Arretierung des deichselförmigen Steuerungsteils 4 zu diesem Zweck ist denkbar.

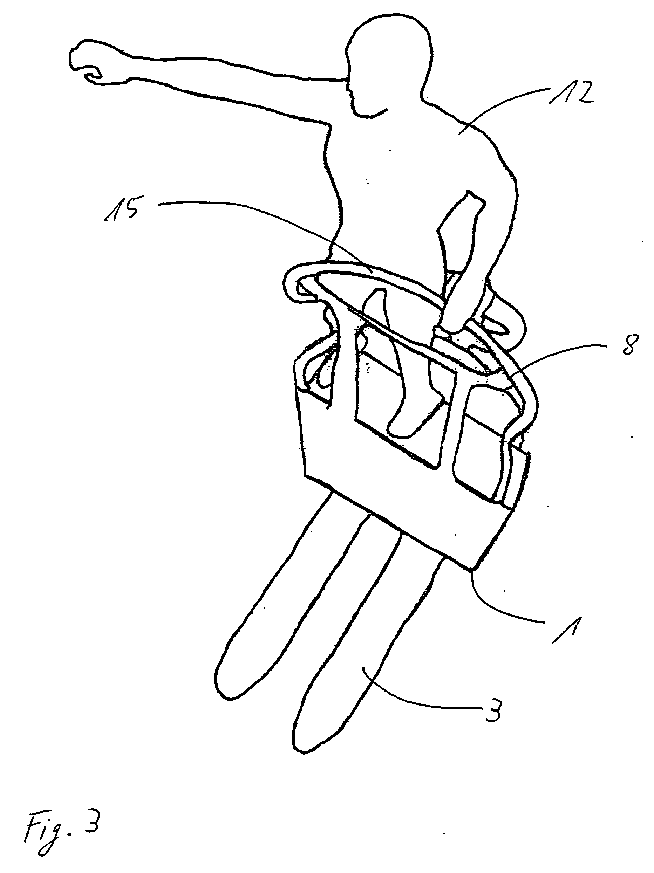

Figur 3 zeigt einen erfindungsgemäßen Hubwagen 1 mit einer Bedienperson 12 auf der Standfläche 6 von schräg hinten gesehen. Die Bedienperson 12 hält sich mit einer Hand an einem Griffelement 15 fest, das Teil des Schutzgitters 8 ist, während sie mit der anderen Hand beispielsweise Waren aus einem Regal entnehmen kann. Selbstverständlich kann die Bedienperson 12 auch andere Arbeiten verrichten, die einen erhöhten Standpunkt erfordern. Das Schutzgitter 8 verhindert zugleich, dass die Bedienperson 12 beim Ablegen von Waren in einer hier nicht dargestellten Palette, die sich auf dem Lastteil 3 befindet, vomüber fallen kann.

## Patentansprüche

1. Mitgängergabelhubwagen (1) mit einem Antriebsteil (2), einem deichselförmigen Steuerungsteil (4) und einem Lastteil (3), **dadurch gekennzeichnet, dass** am Antriebsteil (2) keine feste Fahrerplattform angeordnet ist, und dass die Oberseite des Antriebsteils (2) als Standfläche (6) ausgebildet ist.

2. Mitgängergabelhubwagen 1 nach Anspruch 1, **dadurch gekennzeichnet, dass** mindestens eine Trittstufe (7) zum einfacheren Besteigen der Standfläche (6), vorzugsweise als Teil der Abdeckung (11) des Antriebsteils (2) ausgebildet, am Hubwagen (1) angebracht ist.

3. Mitgängergabelhubwagen (1) nach Anspruch 1 oder 2, **dadurch gekennzeichnet, dass** die Standfläche (6) in einem Abstand von weniger als 1,3 Meter, vorzugsweise weniger als 1 Meter, von der Aufstandsfläche des Hubwagens (1) angeordnet ist.

4. Mitgängergabelhubwagen (1) nach einem der Ansprüche 1 bis 3, **dadurch gekennzeichnet, dass** die mindestens eine Trittstufe (7) seitlich des deichselförmigen Steuerungsteils (4) auf der dem Lastteil (3) abgewandten Seite des Antriebsteils (2) angeordnet ist.

5. Mitgängergabelhubwagen (1) nach einem der Ansprüche 1 bis 4, **dadurch gekennzeichnet, dass** die Trittstufe (7) in einem Abstand von weniger als 75 cm, vorzugsweise weniger als 55 cm, von der Aufstandsfläche des Hubwagens (1) angeordnet ist.

6. Mitgängergabelhubwagen (1) nach einem der Ansprüche 1 bis 5, **dadurch gekennzeichnet, dass** beiderseits des deichselförmigen Bedienteils (4) jeweils mindestens eine Stufe (7) angeordnet ist.

7. Mitgängergabelhubwagen (1) nach einem der Ansprüche 1 bis 6, **dadurch gekennzeichnet, dass** die von der Bedienperson (12) zu betretenden Flächen (6), (7) mit einer rutschfesten Oberfläche versehen sind.

8. Mitgängergabelhubwagen (1) nach einem der Ansprüche 1 bis 7, **dadurch gekennzeichnet, dass** eine Aufstiegshilfe (9) in Form eines Griffelements (10) auf der Oberseite des Antriebsteils (2) angebracht ist.

9. Mitgängergabelhubwagen (1) nach einem der Ansprüche 1 bis 8, **dadurch gekennzeichnet, dass** ein Schutzgitter (8) zwischen Antriebsteil (2) und Lastteil (3) angeordnet ist.

10. Mitgängergabelhubwagen (1) nach einem der Ansprüche 1 bis 9, **dadurch gekennzeichnet, dass** die Aufstiegshilfe (9) und/oder Griffelemente (10) zur Sicherung der Bedienperson (12) als Teil des Schutzgitters (8) ausgebildet sind.

## Claims

1. Pedestrian fork-lift truck (1) having a drive part (2), a control part (4) in the form of a tiller and a load part (3), **characterized in that** there is no fixed driver's platform arranged on the drive part (2), and **in that** the top of the drive part (2) is in the form of a standing area (6).

2. Pedestrian fork-lift truck (1) according to Claim 1, **characterized in that** at least one step (7) for making it easier to mount the standing area (6) is fitted to the lift truck (1), preferably formed as part of the cover (11) of the drive part (2).

3. Pedestrian fork-lift truck (1) according to Claim 1 or 2, **characterized in that** the standing area (6) is arranged at a distance of less than 1.3 meter, preferably less than 1 meter, from the standing surface for the lift truck (1).

4. Pedestrian fork-lift truck (1) according to one of Claims 1 to 3, **characterized in that** the at least one step (7) is arranged to the side of the control part (4) in the form of a tiller, on that side of the drive part (2) which is remote from the load part (3).

5. Pedestrian fork-lift truck (1) according to one of Claims 1 to 4, **characterized in that** the step (7) is arranged at a distance of less than 75 cm, preferably less than 55 cm, from the standing surface for the lift truck (1).

6. Pedestrian fork-lift truck (1) according to one of Claims 1 to 5, **characterized in that** at least one step (7) is arranged on each side of the operating part (4) in the form of a tiller.

7. Pedestrian fork-lift truck (1) according to one of Claims 1 to 6, **characterized in that** the areas (6), (7) to be trodden by the operator (12) are provided with a slip-resistant surface.

8. Pedestrian fork-lift truck (1) according to one of Claims 1 to 7, **characterized in that** a boarding aid (9) in the form of a grip element (10) is fitted on the top of the drive part (2).

9. Pedestrian fork-lift truck (1) according to one of Claims 1 to 8, **characterized in that** a protective railing (8) is arranged between the drive part (2) and the load part (3).

10. Pedestrian fork-lift truck (1) according to one of Claims 1 to 9, **characterized in that** the boarding aid (9) and/or grip elements (10) for the safety of the operator (12) are formed as part of the protective railing (8).

## Revendications

1. Chariot élévateur à bras (1) avec une partie motrice (2), une pièce de commande en forme de timon (4) et une partie de chargement (3), **caractérisé en ce qu'**aucune plate-forme fixe de conducteur n'est disposée sur la partie motrice (2), et **en ce que** la face supérieure de la partie motrice (2) constitue une surface de conduite (6).

2. Chariot élévateur à bras (1) selon la revendication 1, **caractérisé en ce qu'**au moins une marche d'accès (7) destinée à faciliter l'accès à la surface de conduite (6), réalisée comme une partie du couvercle (11) de la partie motrice (2), est installée sur le chariot élévateur (1).

3. Chariot élévateur à bras (1) selon la revendication 1 ou 2, **caractérisé en ce que** la surface de conduite (6) est disposée à une distance de moins de 1,3 mètre, de préférence de moins de 1 mètre, de la surface de roulage du chariot élévateur (1).

4. Chariot élévateur à bras (1) selon l'une quelconque des revendications 1 à 3, **caractérisé en ce que** la au moins une marche d'accès (7) est disposée à côté de la pièce de commande en forme de timon (4) sur le côté de la partie motrice (2) situé à l'opposé de la partie de chargement (3).

5. Chariot élévateur à bras (1) selon l'une quelconque des revendications 1 à 4, **caractérisé en ce que** la marche d'accès (7) est disposée à une distance de moins de 75 cm, de préférence de moins de 55 cm, de la surface de roulage du chariot élévateur (1).

6. Chariot élévateur à bras (1) selon l'une quelconque des revendications 1 à 5, **caractérisé en ce qu'**au moins une marche (7) est disposée de part et d'autre de la pièce de commande en forme de timon (4).

7. Chariot élévateur à bras (1) selon l'une quelconque des revendications 1 à 6, **caractérisé en ce que** les surfaces (6), (7) accessibles à l'opérateur (12) sont pourvues d'une surface antidérapante.

8. Chariot élévateur à bras (1) selon l'une quelconque des revendications 1 à 7, **caractérisé en ce qu'**un moyen d'aide à l'accès (9) sous la forme d'un élément de prise (10) est installé sur le côté supérieur de la partie motrice (2).

9. Chariot élévateur à bras (1) selon l'une quelconque des revendications 1 à 8, **caractérisé en ce qu'**un grillage de protection (8) est disposé entre la partie motrice (2) et la partie de chargement (3).

10. Chariot élévateur à bras (1) selon l'une quelconque des revendications 1 à 9, **caractérisé en ce que** le moyen d'aide à l'accès (9) et/ou l'élément de prise (10) font partie du grillage de protection (8) pour assurer la sécurité de l'opérateur (12).
